# EUROPEAN PATENT APPLICATION

(11) **EP 4 648 149 A1**
(43) Date of publication of application: **12.11.2025**
(21) Application number: 24207259.3
(22) Date of filing: 17.10.2024
(51) Int. Cl.: H01M 10/04, H01M 10/052, H01M 10/0525, H01M 10/0583, H01M 10/0585

(54) **PREPARATION METHODS OF THERMALLY COMPOSITED LAMINATED CELLS AND THERMALLY COMPOSITED LAMINATED CELLS**

(30) Priority: 11.05.2024 CN 202410585963; 11.05.2024 CN 202421024212 U; 15.07.2024 WO PCT/CN2024/105513
(71) Applicant: Eve Power Co., Ltd., Jingmen, Hubei 448000 (CN)
(72) Inventor: LI, Weibo, Jingmen, Hubei, 448000 (CN); CHEN, Liquan, Jingmen, Hubei, 448000 (CN); SU, Bin, Jingmen, Hubei, 448000 (CN); CHEN, Wei, Jingmen, Hubei, 448000 (CN); YUAN, Dingding, Jingmen, Hubei, 448000 (CN); HE, Wei, Jingmen, Hubei, 448000 (CN); LIU, Jincheng, Jingmen, Hubei, 448000 (CN)
(74) Representative: Murgitroyd & Company

(57) **Abstract**

A preparation method of a thermally composited laminated cell and a thermally composited laminated cell (50) are provided. The preparation method includes: preparing a plurality of first electrode plate groups (10) and a plurality of second electrode plate groups (20), each first electrode plate group (10) includes a plurality of first units (100), each second electrode plate group (20) includes a plurality of second units (200). Each of two outermost sides of the first unit (100) is provided with a negative electrode plate (110), and each of two outermost sides of the second unit (200) is provided with a positive electrode plate (130). Providing a first separator (300), and assembling the first electrode plate groups (10), the second electrode plate groups (20) and the first separator (300) to prepare a composite cell group (30). Cutting the composite cell group (30) to prepare a plurality of thermally composited laminated cells (50).

## Description

### TECHNICAL FIELD

The present disclosure relates to the field of battery technology, and in particular, to preparation methods of thermally composited laminated cells and thermally composited laminated cells.

### BACKGROUND

The laminated cell of the lithium battery is prepared by using a Z-shaped folding process. The Z-shaped folding process is to alternately place positive electrode plates and negative electrode plates on a separator that swings in a Z-shape manner. The separator is folded many times, so that there are many processing steps which results in low efficiency.

### SUMMARY

Embodiments of the present disclosure provide a preparation method of a thermally composited laminated cell and a thermally composited laminated cell. By preparing a plurality of first electrode plate groups each provided with a plurality of first units and a plurality of second electrode plate groups each provided with a plurality of second units, and compositing the first electrode plate groups, the second electrode plate groups and a first separator to form a composite cell group, and then cutting the composite cell group along the preset position to prepare a plurality of thermally composited laminated cells, the technical effects of having fewer folding times, fewer processing steps and high processing efficiency can be achieved.

In a first aspect, an embodiment of the present disclosure provides a preparation method of a thermally composited laminated cell including following operations:
preparing a plurality of first electrode plate groups and a plurality of second electrode plate groups, wherein each of the first electrode plate groups includes a plurality of first units, each of the second electrode plate groups includes a plurality of second units, and a number of the first units is same as a number of the second units;
wherein each of the first units and each of the second units include at least one negative electrode plate and at least one positive electrode plate, along a thickness direction of the at least one negative electrode plate, each of the at least one negative electrode plate and each of the at least one positive electrode plate are disposed alternately, each of two outermost sides of each of the first units is provided with one of the at least one negative electrode plate, and each of two outermost sides of each of the second units is provided with one of the at least one positive electrode plate;
providing a first separator, and assembling the plurality of first electrode plate groups, the plurality of second electrode plate groups and the first separator to prepare a composite cell group; wherein the first separator is folded to form a plurality of body portions and a plurality of bending portions disposed continuously and alternately, along a thickness direction of the first electrode plate groups, each of the first electrode plate groups and each of the second electrode plate groups are alternately disposed, one of the first electrode plate groups and one of the second electrode plate groups adjacent to each other are separated by one of the body portion, along a length direction of the body portions, the first units of each of the first electrode plate groups are spaced apart in sequence, the second units of each of the second electrode plate groups are spaced apart in sequence, and each of the first units is disposed opposite to each of the second units; and
cutting the composite cell group along a preset position to prepare a plurality of thermally composited laminated cells, and the preset position is a position between adjacent ones of the first units.

In a second aspect, an embodiment of the present disclosure further provides a thermally composited laminated cell. The thermally composited laminated cell is any one of a plurality of thermally composited laminated cells formed by cutting a composite cell group along a preset position, and the composite cell group includes:
a plurality of first electrode plate groups, wherein each of the first electrode plate groups includes a plurality of first units spaced apart in sequence;
a plurality of second electrode plate groups, wherein each of the second electrode plate groups includes a plurality of second units spaced apart in sequence;
wherein each of the first units and each of the second units include at least one negative electrode plate and at least one positive electrode plate, along a thickness direction of the at least one negative electrode plate, each of the at least one negative electrode plate and each of the at least one positive electrode plate are disposed alternately, each of two outermost sides of each of the first units is provided with one of the at least one negative electrode plate, and each of two outermost sides of each of the second units is provided with one of the at least one positive electrode plate;
a first separator including a plurality of body portions and a plurality of bending portions disposed continuously and alternately, along a thickness direction of the first electrode plate groups, each of the first electrode plate groups and each of the second electrode plate groups are alternately disposed, one of the first electrode plate groups and one of the second electrode plate groups adjacent to each other are separated by one of the body portions, and each of the first units is disposed opposite to each of the second units; and
wherein the preset position is a position between adjacent ones of the first units along a length direction of the body portions.

### Beneficial effects

The embodiments of the present disclosure provide a preparation method of a thermally composited laminated cell and a thermally composited laminated cell. A plurality of first electrode plate groups and a plurality of second electrode plate groups are prepared, each of the first electrode plate groups includes a plurality of first units, each of the second electrode plate groups includes a plurality of second units. Each of the first units and the second unit includes at least one negative electrode plate, second separators and at least one positive electrode plate. The outermost sides of the first unit are provided with negative electrode plates, and the outermost sides of the first electrode plate group composed of the first units are therefore provided with negative electrode plates. The outermost sides of the second unit are provided with positive electrode plates, and the outermost sides of the second electrode plate group composed of the second units are therefore provided with positive electrode plates. M first electrode plate groups, N second electrode plate groups and a first separator are assembled to prepare a composite cell group. The first separator in the laminated cell group is folded to form a plurality of body portions and a plurality of bending portions disposed continuously and alternately. The first electrode plate groups and the second electrode plate groups are alternately disposed. The adjacent first electrode plate group and second electrode plate group are separated by the body portion. Then the composite cell group is cut along the area between the first units to prepare a plurality of thermally composited laminated cells. Therefore, the first separator is folded fewer times, which is beneficial to the alignment of the cell, and a plurality of thermally composited laminated cells can be prepared simultaneously, the cutting sides of which have high alignment, thereby achieving the technical effect of improving the production efficiency of the cell and having high alignment.

### BRIEF DESCRIPTION OF THE DRAWINGS

FIG. 1 is a flow diagram of a preparation method of a thermally composited laminated cell according to some embodiments of the present disclosure.
FIG. 2 is a schematic cross-sectional diagram of a first form of a composite cell group according to some embodiments of the present disclosure.
FIG. 3 is a flow diagram of a preparation method corresponding to the first form of a composite cell group according to some embodiments of the present disclosure.
FIG. 4 is a schematic cross-sectional diagram of a second form of a composite cell group according to some embodiments of the present disclosure.
FIG. 5 is a flow diagram of a preparation method corresponding to the second form of a composite cell group according to some embodiments of the present disclosure.
FIG. 6 is a schematic cross-sectional diagram of one form of a first electrode plate group according to some embodiments of the present disclosure.
FIG. 7 is a schematic cross-sectional diagram of one form of a second electrode plate group according to some embodiments of the present disclosure.
FIG. 8 is a schematic cross-sectional diagram of one form of a first unit according to some embodiments of the present disclosure.
FIG. 9 is a schematic cross-sectional diagram of one form of a second unit according to some embodiments of the present disclosure.
FIG. 10 is a schematic cross-sectional diagram of a thermally composited laminated cell prepared according to a preparation method of a thermally composited laminated cell according to some embodiments.
FIG. 11 is a schematic top view of a composite cell group according to some embodiments of the present disclosure.
FIG. 12 is a partial schematic diagram of a bending portion of a first separator according to some embodiments of the present disclosure.
FIG. 13 is a schematic cross-sectional diagram of a first structure of a thermally composited laminated cell according to some embodiments of the present disclosure.
FIG. 14 is a schematic cross-sectional diagram of a second structure of a thermally composited laminated cell according to some embodiments of the present disclosure.
FIG. 15 is a schematic cross-sectional diagram of a third structure of a thermally composited laminated cell according to some embodiments of the present disclosure.

### Explanation of reference numerals:

10. First electrode plate group; 100. First unit; 110. Negative electrode plate; 111. Negative current collector; 112. Negative active layer; 113. Single-sided electrode plate; 114. Double-sided electrode plate; 120. Second separator; 130. Positive electrode plate; 140. Negative electrode tab; 150. Positive electrode tab; 20. Second electrode plate group; 200. Second unit; 30. Composite cell group; 300. First separator; 310. Body portion; 320. Bending portion; 330. Incomplete-cut-off structure; 331. Through hole; 40. Preset position; 50. Thermally composited laminated cell.

### DETAILED DESCRIPTION

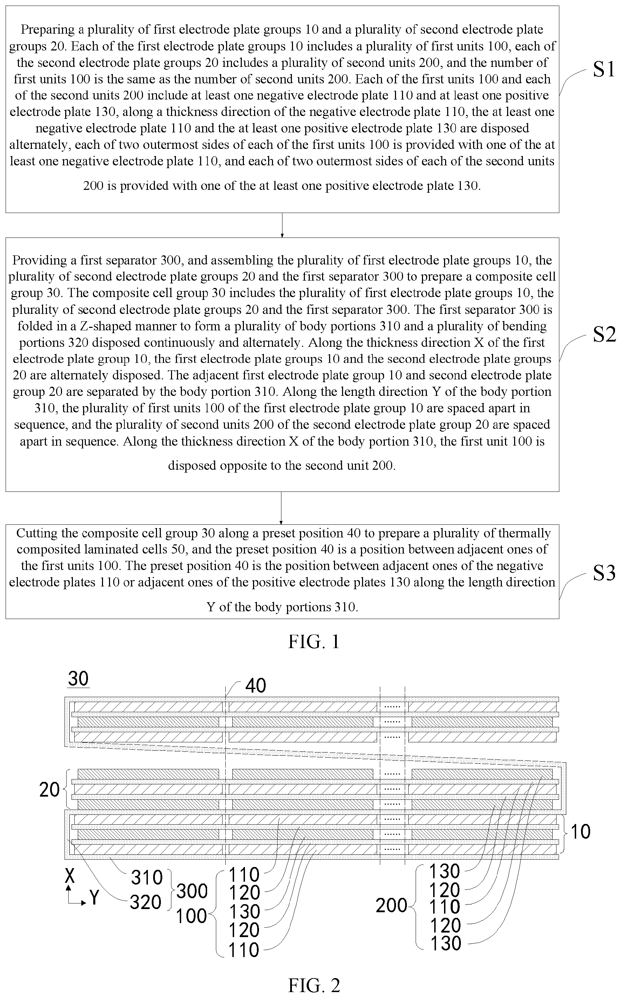

Referring to FIG. 1, FIG. 2, FIG. 4, FIG. 13, FIG. 14 and FIG. 15, an embodiment of the present disclosure provides a preparation method of a thermally composited laminated cell, the preparation method includes the following steps.

S1, preparing a plurality of first electrode plate groups 10 and a plurality of second electrode plate groups 20. Each of the first electrode plate groups 10 includes a plurality of first units 100, each of the second electrode plate groups 20 includes a plurality of second units 200, and the number of first units 100 is the same as the number of second units 200. Each of the first units 100 and each of the second units 200 include at least one negative electrode plate 110 and at least one positive electrode plate 130, along a thickness direction of the negative electrode plate 110, the at least one negative electrode plate 110 and the at least one positive electrode plate 130 are disposed alternately, each of two outermost sides of each of the first units 100 is provided with one of the at least one negative electrode plate 110, and each of two outermost sides of each of the second units 200 is provided with one of the at least one positive electrode plate 130.

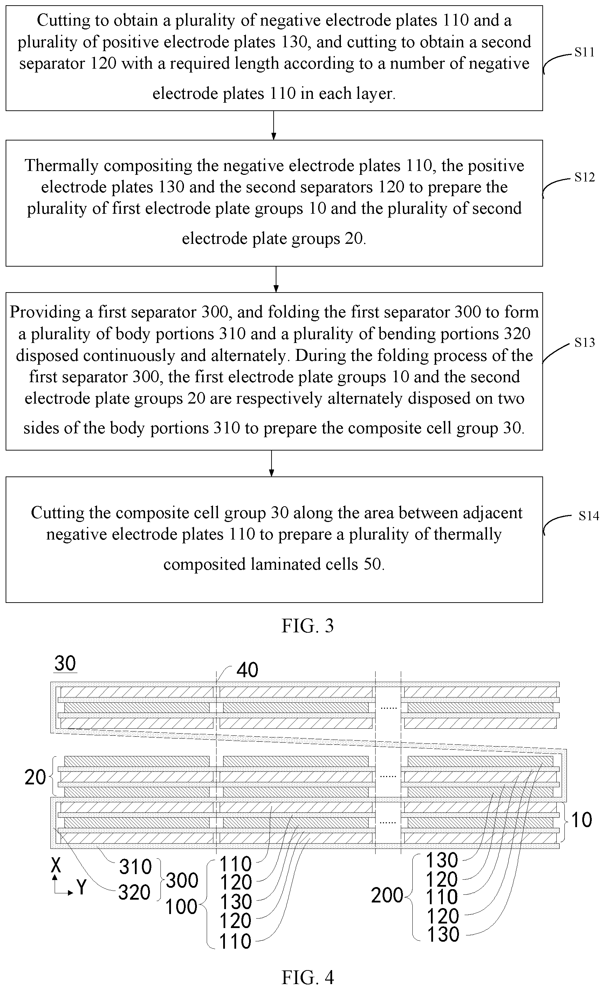

In some embodiments, referring to FIG. 2 and FIG. 4, the negative electrode plates 110 in adjacent first units 100 are spaced apart, and the positive electrode plates 130 in adjacent first units 100 are spaced apart. The negative electrode plates 110 in adjacent second units 200 are spaced apart, and the positive electrode plates 130 in adjacent second units 200 are spaced apart. The length dimension of the negative electrode plate 110 is greater than the length of the positive electrode plate 130, the width dimension of the negative electrode plate 110 is greater than the width dimension of the positive electrode plate 130, and the projection of the positive electrode plate 130 on the plane where the negative electrode plate 110 is located falls within the continuous planar area surrounded by the outer contour of the negative electrode plate 110. This allows all the lithium ions coming out from the positive electrode plate 130 to be received by the corresponding negative electrode plate 110, so as to avoid lithium precipitation and ensure the electrical reliability of the thermally composited laminated cell 50.

S2, providing a first separator 300, and assembling the plurality of first electrode plate groups 10, the plurality of second electrode plate groups 20 and the first separator 300 to prepare a composite cell group 30. Referring to FIG. 2 and FIG. 4, the composite cell group 30 includes the plurality of first electrode plate groups 10, the plurality of second electrode plate groups 20 and the first separator 300. The first separator 300 is folded in a Z-shaped manner to form a plurality of body portions 310 and a plurality of bending portions 320 disposed continuously and alternately. Along the thickness direction X of the first electrode plate group 10, the first electrode plate groups 10 and the second electrode plate groups 20 are alternately disposed. The adjacent first electrode plate group 10 and second electrode plate group 20 are separated by the body portion 310. Along the length direction Y of the body portion 310, the plurality of first units 100 of the first electrode plate group 10 are spaced apart in sequence, and the plurality of second units 200 of the second electrode plate group 20 are spaced apart in sequence. Along the thickness direction X of the body portion 310, the first unit 100 is disposed opposite to the second unit 200.

Exemplarily, during the folding process of the first separator 300, the first electrode plate groups 10 and the second electrode plate groups 20 are clamped and picked by a manipulator, and are alternately disposed on the body portions 310 formed by the first separator 300. The assembling operation of the first electrode plate groups 10, the second electrode plate groups 20 and the first separator 300 is simple.

In some embodiments of the present disclosure, the first units 100, the second units 200 and the first separator 300 can be assembled into a composite cell group 30 during the processing of the first units 100 of the first electrode plate group 10 and the second units 200 of the second electrode plate group 20. Alternatively, the first electrode plate groups 10, the second electrode plate groups 20 and the first separator 300 can be assembled to prepare the composite cell group 30 after the first electrode plate groups 10 and the second electrode plate groups 20 are all processed. The order of the above steps S1 and S2 does not limit the processing order of the first electrode plate group 10, the second electrode plate group 20 and the composite cell group 30.

In some embodiments, all the negative electrode plates 110 in the composite cell group 30 have the same length dimension, width dimension and thickness dimension, and all the positive electrode plates 130 have the same length dimension, width dimension and thickness dimension.

In some embodiments of the present disclosure, all the negative electrode plates 110 in the composite cell group 30 have the same dimension, and all the positive electrode plates 130 have the same dimension. Along the thickness direction of the composite cell group 30, the side edges of the stacked negative electrode plates 110 are located at the same position, and when the composite cell group 30 is cut at any position between adjacent negative electrode plates 110, a safe distance can be maintained between the cutting position and the negative electrode plates 110 in each layer, so as to avoid the occurrence that the electrode plates are cut and facilitate the cutting operation.

In some embodiments, the composite cell group 30 includes M first electrode plate groups 10, N second electrode plate groups 20 and the first separator 300, each of M and N is a positive integer, and M-N=1.

In some embodiments of the present disclosure, the number of the first electrode plate groups 10 is one more than the number of the second electrode plate groups 20, so as to ensure that the outermost sides of the thermally composited laminated cell 50 are provided with the negative electrode plates 110, so that each side of the positive electrode plate 130 is provided with the negative electrode plate 110. It is ensured that the lithium ions coming out from two sides of the positive electrode plate 130 can be received by the negative electrode plate 110 to avoid lithium precipitation.

S3, cutting the composite cell group 30 along a preset position 40 to prepare a plurality of thermally composited laminated cells 50, and the preset position 40 is a position between adjacent ones of the first units 100. The preset position 40 is the position between adjacent ones of the negative electrode plates 110 or adjacent ones of the positive electrode plates 130 along the length direction Y of the body portions 310.

In the embodiments of the present disclosure, the first electrode plate groups 10 and the second electrode plate groups 20 are provided, the first electrode plate group 10 includes a plurality of first units 100, and the second electrode plate group 20 includes a plurality of second units 200. After the first electrode plate groups 10, the second electrode plate groups 20 and the first separator 300 are assembled to form the composite cell group 30, the composite cell group 30 is cut to prepare a plurality of thermally composited laminated cells 50. Therefore, the folding times of the first separator 300 and the stacking times of the electrode plates are reduced, thereby reducing processing steps and improving the processing efficiency of the thermally composited laminated cell 50.

In some embodiments, referring to FIG. 2 and FIG. 4, the negative electrode plate 110 and the positive electrode plate 130 are separated by the second separator 120.

In the embodiments of the present disclosure, the negative electrode plate 110 and the positive electrode plate 130 are separated by the second separator 120, so as to avoid direct contact between the negative electrode plate 110 and the positive electrode plate 130, and ensure the electrical safety of the thermally composited laminated cell 50.

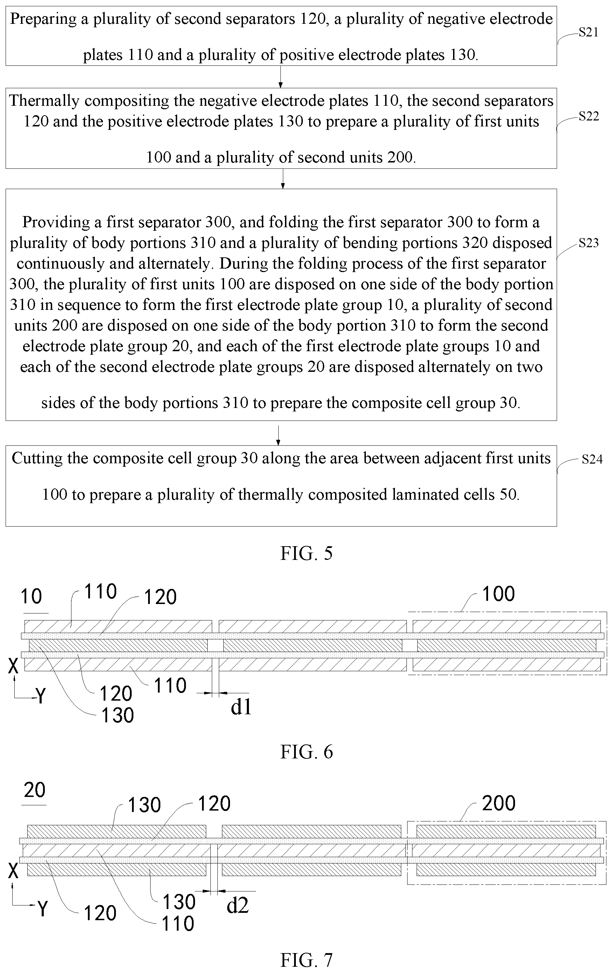

In some embodiments, referring to FIG. 2 and FIG. 6, any adjacent second separators 120 located in the same layer in the first electrode plate group 10 are connected to each other. That is, in the first electrode plate group 10, the second separator 120 is a continuous separator.

In some embodiments, referring to FIG. 2 and FIG. 7, the second separator 120 located in the same layer in the second electrode plate group 20 is a membrane material with a continuous structure. It can be understood that the second separators 120 of any two adjacent second units 200 located in the same layer are connected to each other.

In the embodiments of the present disclosure, the second separator 120 is a membrane material with a continuous structure, which means that in one of the first electrode plate groups 10 or in one of the second electrode plate groups 20, the second separator 120 located on the same side of a plurality of negative electrode plates 110 is as a whole. The length of the second separator 120 is designed according to the number and dimension of the negative electrode plates 110 that need to be installed on the side of the second separator, so as to ensure that the projection of each of the plurality of negative electrode plates 110 located on one side on the plane where the second separator 120 is located completely falls within the second separator 120, avoiding direct contact between the negative electrode plate 110 and the positive electrode plate 130 on two sides of the second separator 120, thereby improving electrical safety.

The second separator 120 is a membrane material with a continuous structure, and the first electrode plate group 10 or the second electrode plate group 20 is an integral structure. During the folding process of the first separator 300, the first electrode plate group 10 or the second electrode plate group 20 is attached to one side surface of the body portion 310 as a whole. There is no need to cut the first electrode plate group 10 or the second electrode plate group 20, which reduces the process steps, improves processing efficiency, and reduces processing costs.

In some embodiments, referring to FIG. 2, the length dimension of each of the first electrode plate group 10 and the second electrode plate group 20 is the same, and the width dimension of each of the first electrode plate group 10 and the second electrode plate group 20 is the same. That is, the dimension of the second separator 120 in the first electrode plate group 10 and the dimension of the second separator 120 in the second electrode plate group 20 are the same, the dimension of the negative electrode plate 110 in the first electrode plate group 10 and the dimension of the second electrode plate 110 in the second electrode plate group 20 are the same, and the dimension of the positive electrode plate 130 in the first electrode plate group 10 and the dimension of the positive electrode plate 130 in the second electrode plate group 20 are the same. The dimension includes length dimension and width dimension.

In the embodiments of the present disclosure, the first electrode plate group 10 and the second electrode plate group 20 are designed to have the same dimension, so that in the composite cell group 30, the side edges of all the second separators 120 are aligned, the side edges of all the negative electrode plates 110 are aligned, and the side edges of all the positive electrode plates 130 are aligned. It is beneficial to cutting the composite cell group 30, and the thermally composited laminated cells 50 prepared by cutting the composite cell group 30 have high alignment.

In some embodiments, referring to FIG. 2, FIG. 6 and FIG. 7, along the length direction Y of the second separator 120, the negative electrode plates 110 located on the same side of the second separator 120 are spaced apart in sequence, and the positive electrode plates 130 located on the same side of the second separator 120 are spaced apart in sequence. Along the thickness direction of the second separator 120, the projection of the positive electrode plate 130 on the negative electrode plate 110 completely falls within the continuous planar area surrounded by the outer contour of the negative electrode plate 110.

Exemplarily, referring to FIG. 2, FIG. 6 and FIG. 7, the distance between any two adjacent negative electrode plates 110 of the negative electrode plates 110 located on the same side of the second separator 120 is the same, and the distance between any two adjacent positive electrode plates 110 of the positive electrode plates 130 located on the same side of the second separator 120 is the same. The composite cell group 30 is cut along the area between adjacent negative electrode plates 110, for example, the composite cell group 30 is cut along the central area between adjacent negative electrode plates 110, so that the thermally composited laminated cells 50 formed after cutting have the same dimension.

Exemplarily, referring to FIG. 2 and FIG. 3, when the second separator 120 is a membrane material with a continuous structure, and the negative electrode plates 110 and the positive electrode plates 130 in each of the first electrode plate group 10 and the second electrode plate group 20 are spaced apart, the preparation method of the thermally composited laminated cell specifically includes the following steps.

S11, cutting to obtain a plurality of negative electrode plates 110 and a plurality of positive electrode plates 130, and cutting to obtain a second separator 120 with a required length according to a number of negative electrode plates 110 in each layer.

S12, thermally compositing the negative electrode plates 110, the positive electrode plates 130 and the second separators 120 to prepare the plurality of first electrode plate groups 10 and the plurality of second electrode plate groups 20.

In some embodiments, in each of the first electrode plate group 10 and the second electrode plate group 20, along the thickness direction X of the second separators 120, each of the negative electrode plates 110 and each of the positive electrode plates 130 are alternately disposed, and adjacent negative electrode plate 110 and positive electrode plate 130 are separated by one of the second separators 120. Along the length direction Y of the second separators 120, a plurality of negative electrode plates 110 are spaced apart on one side of the second separator 120, and a plurality of positive electrode plates 130 are spaced apart on the other side of the second separator 120. Along the thickness direction of the second separators 120, the projection of the positive electrode plate 130 on the negative electrode plate 110 completely falls within the continuous planar area surrounded by the outer contour of the negative electrode plate 110. The outermost side of the first electrode plate group 10 is provided with a plurality of negative electrode plates 110, and the outermost side of the second electrode plate group 20 is provided with a plurality of positive electrode plates 130.

S13, providing a first separator 300, and folding the first separator 300 to form a plurality of body portions 310 and a plurality of bending portions 320 disposed continuously and alternately. During the folding process of the first separator 300, the first electrode plate groups 10 and the second electrode plate groups 20 are respectively alternately disposed on two sides of the body portions 310 to prepare the composite cell group 30.

S14, cutting the composite cell group 30 along the area between adjacent negative electrode plates 110 to prepare a plurality of thermally composited laminated cells 50.

In the embodiments of the present disclosure, after the independent first electrode plate groups 10 and the independent second electrode plate groups 20 are processed, then the first electrode plate groups 10, the second electrode plate groups 20 and the first separator 300 are assembled. There is no need to cut the first electrode plate group 10 and the second electrode plate group 20, which reduces the processing steps and improves the processing efficiency of the thermally composited laminated cell 50.

In some embodiments, as shown in FIG. 4, the second separators 120 located in the same layer of any two adjacent first units 100 in the first electrode plate group 10 are spaced apart; and/or, the second separators 120 located in the same layer of any two adjacent second units 200 in the second electrode plate group 20 are spaced apart.

In some embodiments of the present disclosure, along the length direction Y of the second separator 120, adjacent second separators 120 are not connected with each other, or the side edges of adjacent second separators 120 are in contact with each other. Each first unit 100 in the first electrode plate group 10 is an independent structure. Each second unit 200 in the second electrode plate group 20 is an independent structure. It is convenient to transfer the first units 100 and the second units 200 to the first separator 300, which is beneficial to the processing of the thermally composited laminated cell 50.

Exemplarily, the dimension of the second separator 120 is related to the dimension of a single negative electrode plate 110. The length dimension of the second separator 120 is designed to be greater than the length dimension of the negative electrode plate 110, and the width dimension of the second separator 120 is greater than the width dimension of the negative electrode plate 110.

In the embodiments of the present disclosure, the dimension of the second separator 120 is designed to be larger than the dimension of the negative electrode plate 110, which reduces the possibility of short circuiting caused by direct contact between the negative electrode plate 110 and the positive electrode plate 130, and improves the electrical safety of the thermally composited laminated cell 50.

In some embodiments, referring to FIG 4, along the thickness direction X of the second separators 120, the projections of the negative electrode plate 110 and the positive electrode plate 130 on the second separators 120 completely fall within the second separators 120, and the negative electrode plates 110 and the positive electrode plates 130 are alternately disposed.

In some embodiments of the present disclosure, when the second separator 120, the negative electrode plate 110 and the positive electrode plate 130 have a one-to-one corresponding structure, correspondingly, the plurality of first units 100 in the first electrode plate group 10 are spaced apart along the length direction of the first separator 300 in sequence, and the plurality of second units 200 in the second electrode plate group 20 are spaced apart along the length direction of the first separator 300 in sequence. There are fewer negative electrode plates 110 and fewer positive electrode plates 130 in each first unit 100 and in each second unit 200, so that the alignment during the stacking process is controllable, and the alignment of each first unit 100 and each second unit 200 is high. Along the thickness direction X of the second separator 120, each of a plurality of first units 100 and each of a plurality of second units 200 are alternately disposed to form a thermally composited laminated cell 50. The required number of first units 100 and second units 200 is small, which is conducive to the alignment of the first units 100 and second units 200, thereby ensuring the alignment of the thermally composited laminated cell 50.

Exemplarily, referring to FIG. 4 and FIG. 5, when the second separator 120, the negative electrode plate 110 and the positive electrode plate 130 have a one-to-one corresponding structure, the preparation method of a thermally composited laminated cell specifically includes the following steps.

S21, preparing a plurality of second separators 120, a plurality of negative electrode plates 110 and a plurality of positive electrode plates 130.

S22, thermally compositing the negative electrode plates 110, the second separators 120 and the positive electrode plates 130 to prepare a plurality of first units 100 and a plurality of second units 200.

S23, providing a first separator 300, and folding the first separator 300 to form a plurality of body portions 310 and a plurality of bending portions 320 disposed continuously and alternately. During the folding process of the first separator 300, the plurality of first units 100 are disposed on one side of the body portion 310 in sequence to form the first electrode plate group 10, a plurality of second units 200 are disposed on one side of the body portion 310 to form the second electrode plate group 20, and each of the first electrode plate groups 10 and each of the second electrode plate groups 20 are disposed alternately on two sides of the body portions 310 to prepare the composite cell group 30.

S24, cutting the composite cell group 30 along the area between adjacent first units 100 to prepare a plurality of thermally composited laminated cells 50.

In some embodiments of the present disclosure, the first units 100 and the second units 200 are firstly prepared and then assembled with the first separator 300, so that the first electrode plate group 10 and the second electrode plate group 20 are formed during the assembling process. During the processing of the first unit 100 and the second unit 200, direct stacking processing can be used to facilitate control of the alignment of a single first unit 100 and a single second unit 200. During the assembling process of the first unit 100 and the second unit 200, the camera positioning system is used for positioning, so as to ensure the alignment of the first electrode plate group 10 and the second electrode plate group 20, thereby ensuring the alignment of the prepared thermally composited laminated cell 50. Moreover, it can be combined into existing production device, with minimal modification of the device and high possibility of implementation.

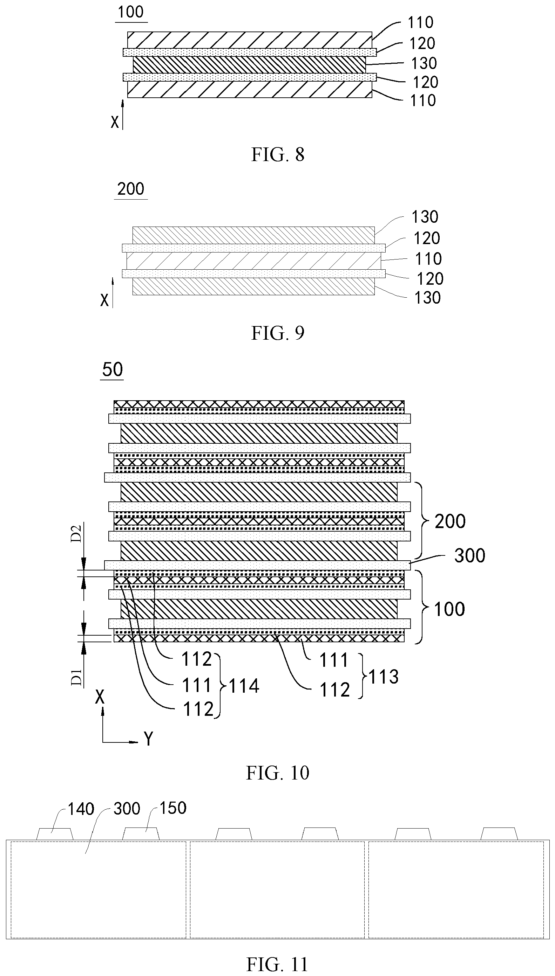

In some embodiments, referring to FIG. 8, along the thickness direction X of the first units 100, the first unit 100 is formed by stacking a negative electrode plate 110, a second separator 120, a positive electrode plate 130, a second separator 120, and a negative electrode plate 110 in sequence.

In this embodiment of the present disclosure, the first unit 100 has a five-layered structure and which is the smallest unit of the first unit 100. Since the first unit 100 has fewer layers, it is easy to process, and the alignment of the negative electrode plate 110, the second separator 120 and the positive electrode plate 130 is controllable. By using the first unit 100 with the above structure to process the thermally composite laminated cell 50, it can not only reduce the processing steps, but also ensure the alignment of the thermally composited laminated cell 50. According to requirements, the first units 100 can be used to be stacked to form thermally composited laminated cells 50 with different specifications, which has good versatility.

In some embodiments, referring to FIG. 9, along the thickness direction X of the second unit 200, the second unit 100 is formed by stacking a positive electrode plate 130, a second separator 120, a negative electrode plate 110, a second separator 120, and a positive electrode plate 130 in sequence.

In this embodiment of the present disclosure, the second unit 200 has a five-layered structure and which is the smallest unit of the second unit 200. Since the second unit 200 has fewer layers, it is easy to process, and the alignment of the negative electrode plate 110, the second separator 120 and the positive electrode plate 130 is controllable. By using the second unit 200 with the above structure to process the thermally composite laminated cell 50, it can not only reduce the processing steps, but also ensure the alignment of the thermally composited laminated cell 50. According to requirements, the second unit 200 can be used to be stacked to form thermally composited laminated cells 50 with different specifications, which has good versatility.

Exemplarily, referring to FIG. 8 and FIG. 9, the second separator 120, the negative electrode plate 110 and the positive electrode plate 130 are in one-to-one correspondence. The length dimension of the second separator 120 is greater than the length dimension of the negative electrode plate 110, the length dimension of the negative electrode plate 110 is greater than the length dimension of the positive electrode plate 130, the width dimension of the second separator 120 is greater than the width dimension of the negative electrode plate 110, and the width dimension of the negative electrode plate 110 is larger than the width dimension of the positive electrode plate 130. The negative electrode plate 110 and the positive electrode plate 130 are separated by the second separator 120. The outermost layers of the first unit 100 are all provided with the negative electrode plates 110, and the outermost layers of the second unit 200 are all provided with the positive electrode plates 130.

In some embodiments of the present disclosure, the dimension of the second separator 120 is designed to be larger than the dimension of the negative electrode plate 110 and the dimension of the positive electrode plate 130, so that the negative electrode plate 110 and the positive electrode plate 130 are completely separated by the second separator 120, thereby reducing the possibility of short circuiting caused by direct contact of the negative electrode plate 110 and the positive electrode plate 130, and ensuring the electrical safety of each first unit 100 or each second unit 200. The dimension of the negative electrode plate 110 is designed to be larger than the dimension of the positive electrode plate 130, so that the lithium ions deintercalated from the positive electrode plate 130 can enter the corresponding negative electrode plate 110, so as to prevent lithium precipitation on the surface of the negative electrode plate 110, thereby reducing the occurrence that the second separator 120 and the first separator are pierced due to lithium precipitation and improving the reliability of the thermally composited laminated cell 50.

In other embodiments, the first unit 100 and the second unit 200 can also adopt a structure with more than five layers, as long as the outermost side of the first unit 100 is provided with the negative electrode plate 110, and the outermost side of the second unit 200 is provided with the positive electrode plate 130.

In other embodiments, in the first unit 100 or the second unit 200, any two second separators 120 are connected along the thickness direction of the negative electrode plate 110, and the second separators 120 are folded in a Z-shaped manner to form horizontal portions and vertical portions disposed continuously, and adjacent negative electrode plate 110 and positive electrode plate 130 are separated by the horizontal portion. The second separator 120 may be a single-layered separator or a double-layered separator, which are not specifically limited in the embodiments herein.

In some embodiments of the present disclosure, the second separator 120 in each first unit 100 or each second unit 200 is a continuous separator. The first unit 100 or the second unit 200 can be processed through a folding process, and the processing process is simple.

In some embodiments, the negative electrode plate 110 and the positive electrode plate 130 in the first unit 100 are connected to the second separator 120 respectively in a thermally composited manner; and/or, the negative electrode plate 110 and the positive electrode plate 130 in the second unit 200 are connected to the second separator 120 respectively in a thermally composited manner.

The negative electrode plate 110 and the positive electrode plate 130 being connected to the second separator 120 in a thermally composited manner means that the negative electrode plate 110 and the positive electrode plate 130 are fixed on the surface of the second separator 120 through a thermal composite process. Exemplarily, the thermal composite process is as follows. The positive electrode coil, the negative electrode coil, and the separator are fed at the same time. Before entering the heating device, the positive electrode plates and the negative electrode plates are cut into single electrode plates with required sizes by a cutter. The combing body of the negative electrode plates, the positive electrode plates and the separator enters the heating system under the action of rollers. The separator is a rubber-coated separator, which becomes sticky after being heated. After being baked, the positive electrode plates, the negative electrode plates and the separator are thermally composited, and then rolled and cut to form the first units 100 or the second units 200.

In some embodiments, referring to FIG. 6, the distance between adjacent first units 100 is d1, and 3 mm≤d1≤5 mm. In the embodiments, the distance between first units 100 refers to the gap between adjacent negative electrode plates 110 located on the same layer in adjacent first units 100. The value of d1 can be 3 mm, 3.3 mm, 3.7 mm, 3.9 mm, 4 mm, 4.6 mm, 5 mm or other values which are not specifically listed herein.

In some embodiments, referring to FIG. 7, the distance between adjacent second units 200 is d2, and 3 mm≤d2≤5 mm. In the embodiments, the distance between second units 200 refers to the gap between adjacent positive electrode plates 220 located on the same layer in adjacent second units 200. The value of d2 can be 3 mm, 3.3 mm, 3.7 mm, 3.9 mm, 4 mm, 4.6 mm, 5 mm or other values which are not specifically listed herein.

When the composite cell group 30 is cut, it is cut along the area between adjacent negative electrode plates 110, for example, along the position of ½d1 between adjacent first units 100, so that the cutting position is suitable while the cutting is satisfied, thereby reducing the possibility that the negative electrode plate 110 is scratched or cut due to the cutting position being close to the negative electrode plate 110 on one side of the cutting position. Therefore, it ensures safe cutting, and at the same time avoids waste of materials of the second separator 120 and the first separator 300 due to the reserved distance between the negative electrode plates 110 being too large, and increases production costs.

In some embodiments, referring to FIG. 6 and FIG. 7, the distance d1 between adjacent first units 100 is the same as the distance d2 between adjacent second units 200.

In some embodiments of the present disclosure, the distance d1 between adjacent first units 100 and the distance d2 between adjacent second units 200 are designed to be the same, so that in each layer of the composite cell group 30, the distance between adjacent negative electrode plates 110 is the same, and the distance between adjacent positive electrode plates 130 is the same. Along the thickness direction of the negative electrode plate 110, the projection of each of the negative electrode plates 110 located at the same position of the thermally composited laminated cell 50 is overlapped with each other, so that none of the electrode plates will be cut when cutting along the thickness direction of the composite cell group 30 from top to bottom, which is convenient for the cutting operations.

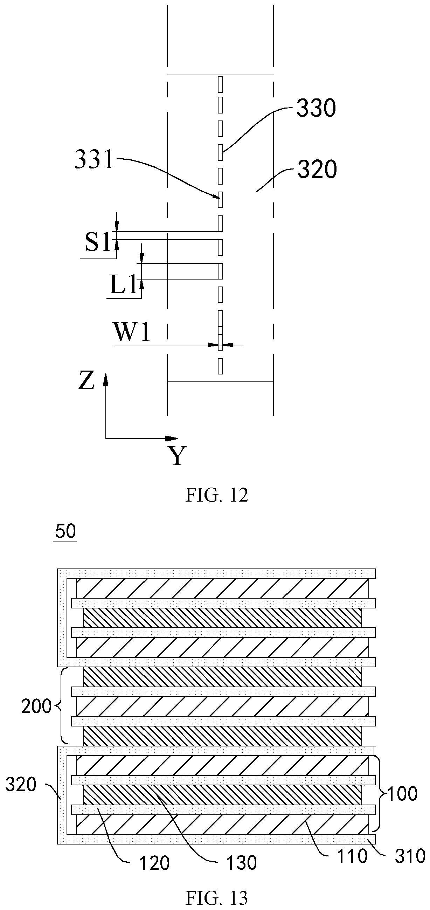

In some embodiments, referring to FIG. 12, the bending portion 320 is provided with an incomplete-cut-off structure 330, and the first separator 300 is folded at the incomplete-cut-off structure 330. By disposing the incomplete-cut-off structure 330 on the first separator 300, the first separator 300 is folded along the incomplete-cut-off structure 330, therefore, the folding position is fixed, thereby improving the alignment of the first electrode plate group 10 and the second electrode plate group 20 during the folding process. Therefore, the occurrence that the first separator 300 will be pierced due to lithium precipitation caused by the misalignment of the negative electrode plate 110 and the positive electrode plate 130 resulting from the misalignment of the first electrode plate group 10 or the second electrode plate group 20 is reduced, and electrical performance such as cycle life, fast charging capacity and safety of the thermally composited laminated cell 50 can be improved.

In some embodiments, referring to FIG. 12, the incomplete-cut-off structure 330 includes a plurality of through holes 331 penetrating the first separator 300, and the plurality of through holes 331 are spaced apart along the width direction Z of the first separator 300. Alternatively, the plurality of through holes 331 are arranged in an array, and the through holes 331 are arranged in multiple columns along the length direction Y of the first separator 300. Each column of through holes 331 can be arranged along the width direction Z of the first separator 300. Exemplarily, the arrangement directions of the multiple columns of through holes 331 may be parallel to each other. In some other embodiments, there may be an included angle formed between the arrangement direction of at least one column of through holes 331 and the arrangement direction of other columns of through holes 331. Exemplarily, the included angle may be less than or equal to 10°, for example, 1°, 2°, 5°, and the like. In some other embodiments, the included angle may be greater than 10°, which are not limited in the embodiments of the present disclosure. Exemplarily, multiple through holes 331 in one of any two columns of through holes 331 may be disposed in one-to-one correspondence with multiple through holes 331 in the other column of through holes. In some other embodiments, multiple through holes 331 of at least one column of through holes are disposed staggeredly with multiple through holes 331 of other columns of through holes. If the projections of two through holes 331 in the length direction Y of the separator 300 do not overlap, it can be considered that the two through holes 331 are disposed staggeredly. For example, multiple through holes 331 in one of two adjacent columns of through holes 331 may be disposed staggeredly with the multiple through holes 331 in the other column of two adjacent columns of through holes. In some other embodiments, the incomplete-cut-off structure 330 may also include a plurality of slits spaced apart from each other. The slit can be obtained by cutting the first separator 300 with a knife or the like. In addition, the incomplete-cut-off structure 330 may also be a meshed structure.

In some embodiments of the present disclosure, by disposing a plurality of through holes 331 in the first separator 300 to form the incomplete-cut-off structure 330, part of materials on the first separator 300 is cut off. Along the width direction Z of the first separator 300, the first separator 300 is not completely cut off, so that the first separator 300 around the through holes 331 is weak. When being folded, the first separator 300 will be folded along the position where the through holes 331 are located, so as to achieve precise position folding, which is beneficial to the alignment of the thermally composited laminated cell 50.

In some embodiments, referring to FIG. 12, the distance between any two adjacent through holes 331 is the same. The distance between adjacent through holes 331 refers to the distance between one side edge of one through hole 331 and one side edge of the adjacent through hole 331 along the width direction Z of the first separator 300.

In some embodiments of the present disclosure, the distance between adjacent through holes 331 is the same, which is beneficial to processing the through holes 331 on the first separator 300, so that the strength of the first separator 300 on the straight line where multiple through holes 331 are located is the same, and thereby avoiding the situation that the first separator is broken during the folding process due to weak strength at local areas.

In some embodiments, referring to FIG. 12, the distance between adjacent through holes 331 along the width direction of the first separator 300 is S1, and 5 mm≤S1≤20 mm. The value of S1 can be 5.0 mm, 5.2 mm, 5.7 mm, 7.8 mm, 9.0 mm, 10.5 mm, 11.5 mm, 12.3 mm, 13.9 mm, 14.0 mm, 15.7 mm, 16.1 mm, 17.4 mm, 18.0 mm, 19.6 mm, 20.0 mm or other values which are not explicitly specified herein.

In some embodiments of the present disclosure, the distance S1 between the through holes 331 is designed to be greater than or equal to 5 mm, so as to avoid the situation that the distance between the through holes 331 is too small and there are too many through holes 331, which affects the structural strength of the first separator 300. The distance S1 between the through holes 331 is designed to be less than or equal to 20 mm, so as to avoid the situation that the distance between the through holes 331 is too large and the number of the through holes 331 is too small, which result in that the through holes cannot play the role of positioning the folding position during the folding process. The distance between the through holes 331 is designed reasonably to ensure the folding quality.

In some embodiments, referring to FIG. 12, the through hole 331 has a first dimension L1 and a second dimension W1. The first dimension is the distance between two parallel planes that virtually abut against the hole walls at two sides of the through hole 331, and the second dimension is the distance between two parallel planes that virtually abut against the hole walls at two ends of the through hole 331, wherein 1 mm ≤ L1 ≤ 20 mm, and/or 1 mm ≤ W1 ≤ 2 mm. In some embodiments, the value of L1 can be 1.1 mm, 1.2 mm, 1.5 mm, 2.3 mm, 3.4 mm, 4.2 mm, 5.0 mm, 6.8 mm, 7.8 mm, 8.8 mm, 9.0 mm, 10.3 mm, 11.1 mm, 12.5 mm, 13.8 mm, 14.1 mm, 15.0 mm, 16.6 mm, 17.7 mm, 18.2 mm, 19.1 mm, 20.0 mm or other values which are not specifically listed herein. In some embodiments, the value of W1 can be 1.1 mm, 1.2 mm, 1.4 mm, 1.5 mm, 1.8 mm, 2.0 mm or other values which are not specifically listed herein.

The two parallel planes virtually abut against the through hole 331 are only introduced to facilitate the understanding of the first dimension and the second dimension, and do not actually exist in the solutions of the present disclosure. Exemplarily, the through hole 331 has a rectangular outer contour. In order to determine the first dimension and the second dimension, it can be assumed that two groups of planes are existed. Each group of planes includes two parallel planes that are spaced apart. The two parallel planes of each group can jointly and virtually abut against two opposite hole walls of the through hole 331. It can be understood that there is a distance between two parallel planes of each group, the first dimension is the distance between the two planes abutting against the hole walls at two sides of the through hole 331, and the second dimension is the distance between two planes abutting against the hole walls at two ends of the through hole 331.

In the embodiments of the present disclosure, the dimension of the through hole 331 is designed reasonably, so as to avoid the situation that the dimension of the through hole 331 is too large which affects the structural strength of the first separator 300, or the dimension of the through hole 331 is too small which results in that the through hole cannot play a role of positioning the folding position during the folding process.

In some embodiments, referring to FIG. 12, the shape of the through hole 331 is a regular shape such as a rectangle, a circle, an ellipse, or a regular polygon. In addition to the regular shape, the through hole 331 may also have an irregular shape.

In some embodiments, referring to FIG. 10, the negative electrode plate 110 located outermost side of the composite cell group 30 is a single-sided electrode plate 113, and other negative electrode plates 110 are double-sided electrode plates 114. The negative electrode plate 110 disposed on the outermost side of the composite cell group 30 is designed to be a single-sided electrode plate 113, so that there is no need to provide an active material layer on the outermost side of the single-sided electrode plate 113, thereby reducing material input and cost.

Exemplarily, referring to FIG. 10, the single-sided electrode plate 113 includes a negative current collector 111 and a negative active layer 112. The negative active layer 112 is disposed on one side of the negative current collector 111 close to the second separator 120. The material of the negative current collector 111 may be copper, and the material of the negative active layer 112 may be graphite.

In some embodiments of the present disclosure, the negative electrode plate 110 disposed on the outermost side of the composite cell group 30 is designed to be the single-sided electrode plate 113, which reduces the use of negative active materials and reduces processing costs, and the outermost side of the single-sided electrode plate 113 does not need to be covered by the separator, thereby reducing the use of separator material and further reducing processing costs. Compared with related technologies, two layers of negative active layers 112 and two layers of separators are reduced, thereby reducing the thickness of the thermally composited laminated cell 50.

Exemplarily, referring to FIG. 10, the double-sided electrode plate 114 includes a negative current collector 111 and two negative active layers 112. Each of two side surfaces of the negative current collector 111 is provided with the negative active layer 112. The material of the negative current collector 111 may be copper, and the material of the negative active layer 112 may be graphite. The double-sided electrode plate 114 satisfies the electrical requirements of the thermally composited laminated cell 50.

In some embodiments, referring to FIG. 10, the negative electrode plate 110 includes the negative current collector 111 and the negative active layer 112. The thickness of the negative current collector 111 is D1, and 4 µm ≤ D1 ≤ 6 µm. The value of D1 can be 4.0 µm, 4.1 µm, 4.7 µm, 5.0 µm, 5.4 µm, 5.6 µm, 6.0 µm or other values which are not specifically listed herein. The thickness of the negative current collector 111 is reasonably designed to satisfy the electrical requirements of the negative electrode plate 110.

In some embodiments, referring to FIG. 10, the thickness of the negative active layer 112 is D2, and 50 µm≤D2≤200 µm. The value of D2 can be 50 µm, 65 µm, 72 µm, 89 µm, 95 µm, 108 µm, 117 µm, 122 µm, 136 µm, 144 µm, 159 µm, 162 µm, 175 µm, 187 µm, 198 µm, 200 µm or other values which are not specifically listed herein. The thickness of the negative active layer 112 is reasonably designed to satisfy the electrical requirements of the negative electrode plate 110.

In some embodiments, the positive electrode plate 130 includes a positive current collector and positive active layers, and each of two side surfaces of the positive current collector is provided with the positive active layer. Exemplarily, the material of the positive current collector may be aluminum foil, and the material of the positive active layer may be one or more of lithium cobalt oxide, lithium nickel oxide, lithium manganese oxide, lithium nickel cobalt manganese oxide, and lithium iron phosphate.

In some embodiments, referring to FIG. 2, FIG. 4 and FIG. 11, a negative electrode tab 140 is disposed on the negative electrode plate 140, a positive electrode tab 150 is disposed on the positive electrode plate 130, and each of the negative electrode tab 140 and the positive electrode tab 150 is at least partially extended outside of the second separator 120.

Exemplarily, in the first unit 100 or the second unit 200, the negative electrode plate 110 and the positive electrode plate 130 are rectangular, the negative electrode tab 140 is disposed on one side of the negative electrode plate 110, and the positive electrode tab 150 is disposed on one side of the positive electrode plate 130. Each of the negative electrode tab 140 and the positive electrode tab 150 is at least partially located outside the second separator 120.

In some embodiments, as shown in FIG. 11, in the composite cell group 30, each of the negative electrode tab 140 and the positive electrode tab 150 is at least partially located outside the first separator 300.

In some embodiments, referring to FIG. 2, FIG. 4 and FIG. 11, in the first unit 100 or the second unit 200, along the thickness direction of the negative electrode plate 110, the projection of each of the negative electrode tabs 140 is overlapped with each other, and/or, the projection of each of the positive electrode tabs 150 is overlapped with each other. The negative electrodes tabs 140 are stacked along with the negative electrode plates 110, and the positive electrode tabs 150 are stacked along with the positive electrode plates 130. Along the thickness direction, adjacent negative electrode tabs 140 are spaced apart by the thickness of the second separator 120, and the projections of all negative electrode tabs 140 are at the same position. Adjacent positive electrode tabs 150 are spaced apart by the thickness of the second separator 120, and the projections of all positive electrode tabs 150 are at the same position. It is convenient to weld all the negative electrode tabs 140 as a whole, and weld all the positive electrode tabs 150 as a whole, and the negative electrode tabs 140 and the positive electrode tabs 150 occupy less space.

In some embodiments, referring to FIG. 2, FIG. 4 and FIG. 11, the projections of the negative electrode tab 140 and the positive electrode tab 150 on the plane where the second separator 120 is located are disposed side by side. The negative electrode tab 140 and the positive electrode tab 150 are on the same side of the second separator 120, and the projections of the negative electrode tab 140 and the positive electrode tab 150 on the plane where the second separator 120 is located are spaced apart, so as to prevent interference between the negative electrode tab 140 and the positive electrode tab 150, thereby ensuring electrical safety.

Referring to FIG. 2, FIG. 4, FIG. 13, FIG. 14 and FIG. 15, an embodiment of the present disclosure further provides a thermally composited laminated cell 50. The thermally composited laminated cell can be used as energy storage units of the battery, and the battery can convert the energy stored in the cell into current and supply it to electronic devices. The thermally composited laminated cell 50 is any one of a plurality of thermally composited laminated cells 50 obtained by cutting the composite cell group 30 along the preset position 40. The composite cell group 30 includes a plurality of first electrode plate groups 10, a plurality of second electrode plate groups 20 and the first separator 300. The first electrode plate group 10 includes a plurality of first units 100 spaced apart in sequence. The second electrode plate group 20 includes a plurality of second units 200 spaced apart in sequence. The first separator 300 includes a plurality of body portions 310 and a plurality of bending portions 320 that are disposed alternately and continuously. Along the thickness direction of the first electrode plate group 10, each of the first electrode plate groups 10 and each of the second electrode plate group 20 are disposed alternately. The adjacent first electrode plate group 10 and second electrode plate group 20 are separated by the body portion 310, and the first unit 100 is disposed opposite to the second unit 200. Each of the first units 100 and each of the second units 200 include at least one negative electrode plate 110 and at least one positive electrode plate 130, along the thickness direction of the at least one negative electrode plate 110, each of the at least one negative electrode plate 110 and each of the at least one positive electrode plate 130 are disposed alternately, each of two outermost sides of each of the first units 100 is provided with one of the at least one negative electrode plate 110, and each of two outermost sides of each of the second units 200 is provided with one of the at least one positive electrode plate 130. The preset position 40 is a position between adjacent first units 100 along the length direction of the body portion 310.

Exemplarily, in a case where the first electrode plate group 10 is provided with i first units 100, and the second electrode plate group 20 is provided with i second units 200, and i is a positive integer, i≥2, then the composite cell group 30 is cut along the preset position 40 to obtain i thermally composited laminated cell 50. The thermally composited laminated cell 50 includes several structures as follows.

The first structure is that: referring to FIG. 13, along the thickness direction of the thermally composited laminated cell 50 from bottom to top, each of the first units 100 and each of the second units 200 are disposed alternately. Adjacent first unit 100 and positive first unit 200 are separated by the partial body portion 310 after the body portion is cut. One side of the first unit 100 located outermost away from the second unit 200 is also provided with the partial body portion 310 after the body portion is cut. One end of the first unit 100 opposite to the cutting side is provided with the bending portion 320.

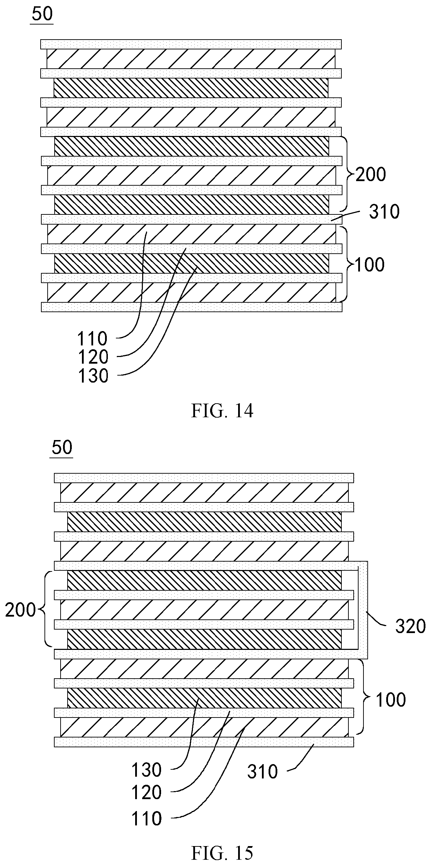

The second structure is that: referring to FIG. 14, along the thickness direction of the thermally composited laminated cell 50 from bottom to top, each of the first units 100 and each of the second units 200 are disposed alternately. Adjacent first unit 100 and positive first unit 200 are separated by the partial body portion 310 after the body portion is cut. One side of the first unit 100 located outermost away from the second unit 200 is also provided with the partial body portion 310 after the body portion is cut.

The third structure is that: referring to FIG. 15, along the thickness direction of the thermally composited laminated cell 50 from bottom to top, each of the first units 100 and each of the second units 200 are disposed alternately. Adjacent first unit 100 and positive first unit 200 are separated by the partial body portion 310 after the body portion is cut. One side of the first unit 100 located outermost away from the second unit 200 is also provided with the partial body portion 310 after the body portion is cut. One end of the second unit 200 opposite to the cutting side is provided with the bending portion 320.

In the embodiments of the present disclosure, there are fewer layered structures of the first unit 100 and the second unit 200 in the first electrode plate group 10, the alignment of the electrode plates and the second separators 120 is controllable, so as to achieve good alignment of the first unit 100 and the second unit 200. Correspondingly, the alignment of the composite cell group 30 stacked by the first electrode plate group 10 and the second electrode plate group 20 with high alignment is also high, and the alignment of the thermally composited laminated cell 50 produced is also high, thereby improving the electrical performance of the thermally composited laminated cell 50. The first electrode plate groups 10, the second electrode plate groups 20 and the separator 300 are assembled, which reduces the number of folding times of the first separator 300, and thereby reducing the processing steps. Along the thickness direction of the composite cell group 30, a plurality of first units 100 or a plurality of second units 200 are respectively provided in each layer. The composite cell group 30 is cut along the position between adjacent first units 100 to prepare a plurality of thermally composited laminated cell 50, which further improves the processing efficiency, and the cutting side has high alignment. This achieves the technical effects of reducing the processing steps of the thermally composited laminated cell 50, improving the production efficiency and achieving high alignment of the thermally composited laminated cell 50.

In some embodiments, as shown in FIG. 2 and FIG. 4, the composite cell group 30 includes a plurality of first electrode plate groups 10, a plurality of second electrode plate groups 20 and the first separator 300. Each of the first electrode plate groups 10 includes a plurality of first units 100 spaced apart in sequence. The first unit 100 includes two negative electrode plates 110 and a positive electrode plate 130. Along the thickness direction of the negative electrode plate 110, the negative electrode plates 110 and the positive electrode plate 130 are alternately disposed. The outermost sides of the first unit 100 are all provided with the negative electrode plates 110, that is, the polarity of the electrode plate located outermost side of the first unit 100 is negative. Each of the second electrode plate groups 20 includes a plurality of second units 200 spaced apart in sequence. The second unit 200 includes a negative electrode plate 110 and two positive electrode plates 130. Along the thickness direction of the negative electrode plate 110, the negative electrode plate 110 and the positive electrode plates 130 are alternately disposed. The outermost sides of the second unit 200 are all provided with the positive electrode plates 130, that is, the polarity of the electrode plate located outermost side of the second unit 200 is positive. The first separator 300 is a continuous belt-like membrane material, and the first separator 300 is folded in a Z-shaped manner to form a plurality of body portions 310 and a plurality of bending portions 320 that are alternately and continuously disposed. Along the thickness direction of the first electrode plate group 10, each of the first electrode plate groups 10 and each of the second electrode plate groups 20 are disposed alternately, and adjacent first electrode plate group 10 and second electrode plate group 20 are separated by the body portion 310. The number of first units 100 in each first electrode plate group 10 is the same as the number of second units 200 in each second electrode plate group 20. Along the length direction Y of the body portion 310, the plurality of first units 100 in the first electrode plate group 10 located on one side of the body portion 310 are spaced apart in sequence, and the plurality of second units 200 in the second electrode plate group 20 located on the other side of the body portion 310 are disposed in sequence. Along the thickness direction X of the body portion 310, the first unit 100 and the second unit 200 located at the same position are disposed in alignment with each other.

Referring to FIG. 11, the negative electrode tab 140 is disposed on the negative electrode plate 140, the positive electrode tab 150 is disposed on the positive electrode plate 130, and each of the negative electrode tab 140 and the positive electrode tab 150 at least partially extends outside of the first separator 300.

Referring to FIG. 1 and FIG. 2, the preset position 40 refers to the position between adjacent first units 100 along the length direction Y of the body portion 310.

In the embodiments of the present disclosure, the first electrode plate group 10 includes a plurality of first units 100, and the second electrode plate group 20 includes a plurality of second units 200. After the first electrode plate groups 10, the second electrode plate groups 20 and the first separator 300 are assembled to form the composite cell group 30, the composite cell group 30 is cut to prepare a plurality of thermally composited laminated cells 50. Therefore, the folding times of the first separator 300 and the stacking times of the electrode plates are reduced, thereby reducing processing steps and improving the processing efficiency of the thermally composited laminated cell 50.

In some embodiments, referring to FIG. 2 and FIG. 4, all the negative electrode plates 110 in the composite cell group 30 have the same length dimension, width dimension and thickness dimension, and all the positive electrode plates 130 have the same length dimension, width dimension and thickness dimension.

In some embodiments of the present disclosure, all the negative electrode plates 110 in the composite cell group 30 have the same dimension, and all the positive electrode plates 130 have the same dimension. Along the thickness direction of the composite cell group 30, the side edges of the stacked negative electrode plates 110 are located at the same position. When cutting the composite cell group 30 along any position between adjacent negative electrode plates 110, the cutting position is kept at a safe distance from the negative electrode plates 110 of each layer, so as to avoid cutting the electrode plates and facilitate the cutting operation.

In some embodiments, referring to FIG. 2 and FIG. 4, the composite cell group 30 includes M first electrode plate groups 10, N second electrode plate groups 20 and the first separator 300, each of M and N is a positive integer, and M-N=1.

In some embodiments of the present disclosure, the number of the first electrode plate groups 10 is one more than the number of the second electrode plate groups 20, so as to ensure that the outermost sides of the thermally composited laminated cell 50 are provided with the negative electrode plates 110, so that each side of the positive electrode plate 130 is provided with the negative electrode plate 110. It is ensured that the lithium ions coming out from two sides of the positive electrode plate 130 can be received by the negative electrode plate 110 to avoid lithium precipitation.

In some embodiments, referring to FIG. 2 and FIG. 4, the negative electrode plate 110 and the positive electrode plate 130 are separated by the second separator 120.

In the embodiments of the present disclosure, the negative electrode plate 110 and the positive electrode plate 130 are separated by the second separator 120, so as to avoid direct contact between the negative electrode plate 110 and the positive electrode plate 130, and ensure the electrical safety of the thermally composited laminated cell 50.

In some embodiments, referring to FIG. 2 and FIG. 6, any adjacent second separators 120 located in the same layer in the first electrode plate group 10 are connected to each other. That is, in the first electrode plate group 10, the second separator 120 is a continuous separator.

In some embodiments, referring to FIG. 2 and FIG. 7, the second separator 120 located in the same layer in the second electrode plate group 20 is a membrane material with a continuous structure. It can be understood that the second separators 120 of any two adjacent second units 200 located in the same layer are connected to each other.

In the embodiments of the present disclosure, the second separator 120 is a membrane material with a continuous structure, which means that in one of the first electrode plate groups 10 or in one of the second electrode plate groups 20, the second separator 120 located on the same side of a plurality of negative electrode plates 110 is as a whole. The length of the second separator 120 is designed according to the number and dimension of the negative electrode plates 110 that need to be installed on the side of the second separator, so as to ensure that the projection of each of the plurality of negative electrode plates 110 located on one side on the plane where the second separator 120 is located completely falls within the second separator 120, avoiding direct contact between the negative electrode plate 110 and the positive electrode plate 130 on two sides of the second separator 120, thereby improving electrical safety.

The second separator 120 is a membrane material with a continuous structure, and the first electrode plate group 10 or the second electrode plate group 20 is an integral structure. During the folding process of the first separator 300, the first electrode plate group 10 or the second electrode plate group 20 is attached to one side surface of the body portion 310 as a whole. There is no need to cut the first electrode plate group 10 or the second electrode plate group 20, which reduces the process steps, improves processing efficiency, and reduces processing costs.

In some embodiments, referring to FIG. 2, the length dimension of each of the first electrode plate group 10 and the second electrode plate group 20 is the same, and the width dimension of each of the first electrode plate group 10 and the second electrode plate group 20 is the same. That is, the dimension of the second separator 120 in the first electrode plate group 10 and the dimension of the second separator 120 in the second electrode plate group 20 are the same, the dimension of the negative electrode plate 110 in the first electrode plate group 10 and the dimension of the second electrode plate 110 in the second electrode plate group 20 are the same, and the dimension of the positive electrode plate 130 in the first electrode plate group 10 and the dimension of the positive electrode plate 130 in the second electrode plate group 20 are the same. The dimension includes length dimension and width dimension.

In the embodiments of the present disclosure, the first electrode plate group 10 and the second electrode plate group 20 are designed to have the same dimension, so that in the composite cell group 30, the side edges of all the second separators 120 are aligned, the side edges of all the negative electrode plates 110 are aligned, and the side edges of all the positive electrode plates 130 are aligned. It is beneficial to cutting the composite cell group 30, and the thermally composited laminated cells 50 prepared by cutting the composite cell group 30 have high alignment.

In some embodiments, referring to FIG. 2, FIG. 6 and FIG. 7, along the length direction Y of the second separator 120, the negative electrode plates 110 located on the same side of the second separator 120 are spaced apart in sequence, and the positive electrode plates 130 located on the same side of the second separator 120 are spaced apart in sequence. Along the thickness direction of the second separator 120, the projection of the positive electrode plate 130 on the negative electrode plate 110 completely falls within the continuous planar area surrounded by the outer contour of the negative electrode plate 110.

Exemplarily, referring to FIG. 2, FIG. 6 and FIG. 7, the distance between any two adjacent negative electrode plates 110 of the negative electrode plates 110 located on the same side of the second separator 120 is the same, and the distance between any two adjacent positive electrode plates 110 of the positive electrode plates 130 located on the same side of the second separator 120 is the same. The composite cell group 30 is cut along the area between adjacent negative electrode plates 110, for example, the composite cell group 30 is cut along the central area between adjacent negative electrode plates 110, so that the thermally composited laminated cells 50 formed after cutting have the same dimension.

In some embodiments of the present disclosure, the negative electrode plates 110 on one side of the second separator 120 are spaced apart, and the positive electrode plates 130 on the other side of the second separator 120 are spaced apart. Each of the positive electrode plates 130 and each of the negative electrode plates 110 are disposed in alignment with each other, which is beneficial to the alignment of the positive electrode plates 130 and the negative electrode plates 110, and facilitates stacking processing of the positive electrode plates 130, the negative electrode plates 110 and the second separators 120.

In some embodiments, as shown in FIG. 4, the second separators 120 located in the same layer of any two adjacent first units 100 in the first electrode plate group 10 are spaced apart; and/or, the second separators 120 located in the same layer of any two adjacent second units 200 in the second electrode plate group 20 are spaced apart.

In some embodiments of the present disclosure, along the length direction Y of the second separator 120, adjacent second separators 120 are not connected with each other, or the side edges of adjacent second separators 120 are in contact with each other. Each first unit 100 in the first electrode plate group 10 is an independent structure. Each second unit 200 in the second electrode plate group 20 is an independent structure. It is convenient to transfer the first units 100 and the second units 200 to the first separator 300, which is beneficial to the processing of the thermally composited laminated cell 50.

Exemplarily, the dimension of the second separator 120 is related to the dimension of a single negative electrode plate 110. The length dimension of the second separator 120 is designed to be greater than the length dimension of the negative electrode plate 110, and the width dimension of the second separator 120 is greater than the width dimension of the negative electrode plate 110.

In the embodiments of the present disclosure, the dimension of the second separator 120 is designed to be larger than the dimension of the negative electrode plate 110, which reduces the possibility of short circuiting caused by direct contact between the negative electrode plate 110 and the positive electrode plate 130, and improves the electrical safety of the thermally composited laminated cell 50.

In some embodiments, referring to FIG. 4, FIG. 8 and FIG. 9, along the thickness direction X of the second separators 120, the projections of the negative electrode plate 110 and the positive electrode plate 130 on the second separators 120 completely fall within the second separators 120, and the negative electrode plates 110 and the positive electrode plates 130 are alternately disposed.

In some embodiments of the present disclosure, when the second separator 120, the negative electrode plate 110 and the positive electrode plate 130 have a one-to-one corresponding structure, correspondingly, the plurality of first units 100 in the first electrode plate group 10 are spaced apart along the length direction of the first separator 300 in sequence, and the plurality of second units 200 in the second electrode plate group 20 are spaced apart along the length direction of the first separator 300 in sequence. There are fewer negative electrode plates 110 and fewer positive electrode plates 130 in each first unit 100 and in each second unit 200, so that the alignment during the stacking process is controllable, and the alignment of each first unit 100 and each second unit 200 is high. Along the thickness direction X of the second separator 120, each of a plurality of first units 100 and each of a plurality of second units 200 are alternately disposed to form a thermally composited laminated cell 50. The required number of first units 100 and second units 200 is small, which is conducive to the alignment of the first units 100 and second units 200, thereby ensuring the alignment of the thermally composited laminated cell 50.

In some embodiments, referring to FIG. 8, along the thickness direction X of the first units 100, the first unit 100 is formed by stacking a negative electrode plate 110, a second separator 120, a positive electrode plate 130, a second separator 120, and a negative electrode plate 110 in sequence.

In this embodiment of the present disclosure, the first unit 100 has a five-layered structure and which is the smallest unit of the first unit 100. Since the first unit 100 has fewer layers, it is easy to process, and the alignment of the negative electrode plate 110, the second separator 120 and the positive electrode plate 130 is controllable. By using the first unit 100 with the above structure to process the thermally composite laminated cell 50, it can not only reduce the processing steps, but also ensure the alignment of the thermally composited laminated cell 50. According to requirements, the first units 100 can be used to be stacked to form thermally composited laminated cells 50 with different specifications, which has good versatility.

In some embodiments, referring to FIG. 9, referring to FIG. 9, along the thickness direction X of the second unit 200, the second unit 100 is formed by stacking a positive electrode plate 130, a second separator 120, a negative electrode plate 110, a second separator 120, and a positive electrode plate 130 in sequence.

In this embodiment of the present disclosure, the second unit 200 has a five-layered structure and which is the smallest unit of the second unit 200. Since the second unit 200 has fewer layers, it is easy to process, and the alignment of the negative electrode plate 110, the second separator 120 and the positive electrode plate 130 is controllable. By using the second unit 200 with the above structure to process the thermally composite laminated cell 50, it can not only reduce the processing steps, but also ensure the alignment of the thermally composited laminated cell 50. According to requirements, the second unit 200 can be used to be stacked to form thermally composited laminated cells 50 with different specifications, which has good versatility.

Exemplarily, referring to FIG. 8 and FIG. 9, the second separator 120, the negative electrode plate 110 and the positive electrode plate 130 are in one-to-one correspondence. The length dimension of the second separator 120 is greater than the length dimension of the negative electrode plate 110, the length dimension of the negative electrode plate 110 is greater than the length dimension of the positive electrode plate 130, the width dimension of the second separator 120 is greater than the width dimension of the negative electrode plate 110, and the width dimension of the negative electrode plate 110 is larger than the width dimension of the positive electrode plate 130. The negative electrode plate 110 and the positive electrode plate 130 are separated by the second separator 120. The outermost layers of the first unit 100 are all provided with the negative electrode plates 110, and the outermost layers of the second unit 200 are all provided with the positive electrode plates 130.

In some embodiments of the present disclosure, the dimension of the second separator 120 is designed to be larger than the dimension of the negative electrode plate 110 and the dimension of the positive electrode plate 130, so that the negative electrode plate 110 and the positive electrode plate 130 are completely separated by the second separator 120, thereby reducing the possibility of short circuiting caused by direct contact of the negative electrode plate 110 and the positive electrode plate 130, and ensuring the electrical safety of each first unit 100 or each second unit 200. The dimension of the negative electrode plate 110 is designed to be larger than the dimension of the positive electrode plate 130, so that the lithium ions deintercalated from the positive electrode plate 130 can enter the corresponding negative electrode plate 110, so as to prevent lithium precipitation on the surface of the negative electrode plate 110, thereby reducing the occurrence that the second separator 120 and the first separator are pierced due to lithium precipitation and improving the reliability of the thermally composited laminated cell 50.

In other embodiments, the first unit 100 and the second unit 200 can also adopt a structure with more than five layers, as long as the outermost side of the first unit 100 is provided with the negative electrode plate 110, and the outermost side of the second unit 200 is provided with the positive electrode plate 130.

In other embodiments, in the first unit 100 or the second unit 200, any two second separators 120 are connected along the thickness direction of the negative electrode plate 110, and the second separators 120 are folded in a Z-shaped manner to form horizontal portions and vertical portions disposed continuously, and adjacent negative electrode plate 110 and positive electrode plate 130 are separated by the horizontal portion. The second separator 120 may be a single-layered separator or a double-layered separator, which are not specifically limited in the embodiments herein.

In some embodiments of the present disclosure, the second separator 120 in each first unit 100 or each second unit 200 is a continuous separator. The first unit 100 or the second unit 200 can be processed through a folding process, and the processing process is simple.

In some embodiments, the negative electrode plate 110 and the positive electrode plate 130 in the first unit 100 are connected to the second separator 120 respectively in a thermally composited manner; and/or, the negative electrode plate 110 and the positive electrode plate 130 in the second unit 200 are connected to the second separator 120 respectively in a thermally composited manner.

The negative electrode plate 110 and the positive electrode plate 130 being connected to the second separator 120 in a thermally composited manner means that the negative electrode plate 110 and the positive electrode plate 130 are fixed on the surface of the second separator 120 through a thermal composite process. Exemplarily, the thermal composite process is as follows. The positive electrode coil, the negative electrode coil, and the separator are fed at the same time. Before entering the heating device, the positive electrode plates and the negative electrode plates are cut into single electrode plates with required sizes by a cutter. The combing body of the negative electrode plates, the positive electrode plates and the separator enters the heating system under the action of rollers. The separator is a rubber-coated separator, which becomes sticky after being heated. After being baked, the positive electrode plates, the negative electrode plates and the separator are thermally composited, and then rolled and cut to form the first units 100 or the second units 200.

In some embodiments, referring to FIG. 6, the distance between adjacent first units 100 is d1, and 3 mm≤d1≤5 mm. In the embodiments, the distance between first units 100 refers to the gap between adjacent negative electrode plates 110 located on the same layer in adjacent first units 100. The value of d1 can be 3 mm, 3.3 mm, 3.7 mm, 3.9 mm, 4 mm, 4.6 mm, 5 mm or other values which are not specifically listed herein.

In some embodiments, referring to FIG. 7, the distance between adjacent second units 200 is d2, and 3 mm≤d2≤5 mm. In the embodiments, the distance between second units 200 refers to the gap between adjacent positive electrode plates 220 located on the same layer in adjacent second units 200. The value of d2 can be 3 mm, 3.3 mm, 3.7 mm, 3.9 mm, 4 mm, 4.6 mm, 5 mm or other values which are not specifically listed herein.

When the composite cell group 30 is cut, it is cut along the area between adjacent negative electrode plates 110, for example, along the position of ½d1 between adjacent first units 100, so that the cutting position is suitable while the cutting is satisfied, thereby reducing the possibility that the negative electrode plate 110 is scratched or cut due to the cutting position being close to the negative electrode plate 110 on one side of the cutting position. Therefore, it ensures safe cutting, and at the same time avoids waste of materials of the second separator 120 and the first separator 300 due to the reserved distance between the negative electrode plates 110 being too large, and increases production costs.

In some embodiments, referring to FIG. 6 and FIG. 7, the distance d1 between adjacent first units 100 is the same as the distance d2 between adjacent second units 200.

In some embodiments of the present disclosure, the distance d1 between adjacent first units 100 and the distance d2 between adjacent second units 200 are designed to be the same, so that in each layer of the composite cell group 30, the distance between adjacent negative electrode plates 110 is the same, and the distance between adjacent positive electrode plates 130 is the same. Along the thickness direction of the negative electrode plate 110, the projection of each of the negative electrode plates 110 located at the same position of the thermally composited laminated cell 50 is overlapped with each other, so that none of the electrode plates will be cut when cutting along the thickness direction of the composite cell group 30 from top to bottom, which is convenient for the cutting operations.

In some embodiments, referring to FIG. 12, the bending portion 320 is provided with an incomplete-cut-off structure 330, and the first separator 300 is folded at the incomplete-cut-off structure 330. By disposing the incomplete-cut-off structure 330 on the first separator 300, the first separator 300 is folded along the incomplete-cut-off structure 330, therefore, the folding position is fixed, thereby improving the alignment of the first electrode plate group 10 and the second electrode plate group 20 during the folding process. Therefore, the occurrence that the first separator 300 will be pierced due to lithium precipitation caused by the misalignment of the negative electrode plate 110 and the positive electrode plate 130 resulting from the misalignment of the first electrode plate group 10 or the second electrode plate group 20 is reduced, and electrical performance such as cycle life, fast charging capacity and safety of the thermally composited laminated cell 50 can be improved.

In some embodiments, referring to FIG. 12, the incomplete-cut-off structure 330 includes a plurality of through holes 331 penetrating the first separator 300, and the plurality of through holes 331 are spaced apart along the width direction Z of the first separator 300. Alternatively, the plurality of through holes 331 are arranged in an array, and the through holes 331 are arranged in multiple columns along the length direction Y of the first separator 300. Each column of through holes 331 can be arranged along the width direction Z of the first separator 300. Exemplarily, the arrangement directions of the multiple columns of through holes 331 may be parallel to each other. In some other embodiments, there may be an included angle formed between the arrangement direction of at least one column of through holes 331 and the arrangement direction of other columns of through holes 331. Exemplarily, the included angle may be less than or equal to 10°, for example, 1°, 2°, 5°, and the like. In some other embodiments, the included angle may be greater than 10°, which are not limited in the embodiments of the present disclosure. Exemplarily, multiple through holes 331 in one of any two columns of through holes 331 may be disposed in one-to-one correspondence with multiple through holes 331 in the other column of through holes. In some other embodiments, multiple through holes 331 of at least one column of through holes are disposed staggeredly with multiple through holes 331 of other columns of through holes. If the projections of two through holes 331 in the length direction Y of the separator 300 do not overlap, it can be considered that the two through holes 331 are disposed staggeredly. For example, multiple through holes 331 in one of two adjacent columns of through holes 331 may be disposed staggeredly with the multiple through holes 331 in the other column of two adjacent columns of through holes. In some other embodiments, the incomplete-cut-off structure 330 may also include a plurality of slits spaced apart from each other. The slit can be obtained by cutting the first separator 300 with a knife or the like. In addition, the incomplete-cut-off structure 330 may also be a meshed structure.

In some embodiments of the present disclosure, by disposing a plurality of through holes 331 in the first separator 300 to form the incomplete-cut-off structure 330, part of materials on the first separator 300 is cut off. Along the width direction Z of the first separator 300, the first separator 300 is not completely cut off, so that the first separator 300 around the through holes 331 is weak. When being folded, the first separator 300 will be folded along the position where the through holes 331 are located, so as to achieve precise position folding, which is beneficial to the alignment of the thermally composited laminated cell 50.

In some embodiments, referring to FIG. 12, the distance between any two adjacent through holes 331 is the same. The distance between adjacent through holes 331 refers to the distance between one side edge of one through hole 331 and one side edge of the adjacent through hole 331 along the width direction Z of the first separator 300.

In some embodiments of the present disclosure, the distance between adjacent through holes 331 is the same, which is beneficial to processing the through holes 331 on the first separator 300, so that the strength of the first separator 300 on the straight line where multiple through holes 331 are located is the same, and thereby avoiding the situation that the first separator is broken during the folding process due to weak strength at local areas.

In some embodiments, referring to FIG. 12, the distance between adjacent through holes 331 along the width direction of the first separator 300 is S1, and 5 mm≤S1≤20 mm. The value of S1 can be 5.0 mm, 5.2 mm, 5.7 mm, 7.8 mm, 9.0 mm, 10.5 mm, 11.5 mm, 12.3 mm, 13.9 mm, 14.0 mm, 15.7 mm, 16.1 mm, 17.4 mm, 18.0 mm, 19.6 mm, 20.0 mm or other values which are not explicitly specified herein.

In some embodiments of the present disclosure, the distance S1 between the through holes 331 is designed to be greater than or equal to 5 mm, so as to avoid the situation that the distance between the through holes 331 is too small and there are too many through holes 331, which affects the structural strength of the first separator 300. The distance S1 between the through holes 331 is designed to be less than or equal to 20 mm, so as to avoid the situation that the distance between the through holes 331 is too large and the number of the through holes 331 is too small, which result in that the through holes cannot play the role of positioning the folding position during the folding process. The distance between the through holes 331 is designed reasonably to ensure the folding quality.

In some embodiments, referring to FIG. 12, the through hole 331 has a first dimension L1 and a second dimension W1. The first dimension is the distance between two parallel planes that virtually abut against the hole walls at two sides of the through hole 331, and the second dimension is the distance between two parallel planes that virtually abut against the hole walls at two ends of the through hole 331, wherein 1 mm ≤ L1 ≤ 20 mm, and/or 1 mm ≤ W1 ≤ 2 mm. In some embodiments, the value of L1 can be 1.1 mm, 1.2 mm, 1.5 mm, 2.3 mm, 3.4 mm, 4.2 mm, 5.0 mm, 6.8 mm, 7.8 mm, 8.8 mm, 9.0 mm, 10.3 mm, 11.1 mm, 12.5 mm, 13.8 mm, 14.1 mm, 15.0 mm, 16.6 mm, 17.7 mm, 18.2 mm, 19.1 mm, 20.0 mm or other values which are not specifically listed herein. In some embodiments, the value of W1 can be 1.1 mm, 1.2 mm, 1.4 mm, 1.5 mm, 1.8 mm, 2.0 mm or other values which are not specifically listed herein.

The two parallel planes virtually abut against the through hole 331 are only introduced to facilitate the understanding of the first dimension and the second dimension, and do not actually exist in the solutions of the present disclosure. Exemplarily, the through hole 331 has a rectangular outer contour. In order to determine the first dimension and the second dimension, it can be assumed that two groups of planes are existed. Each group of planes includes two parallel planes that are spaced apart. The two parallel planes of each group can jointly and virtually abut against two opposite hole walls of the through hole 331. It can be understood that there is a distance between two parallel planes of each group, the first dimension is the distance between the two planes abutting against the hole walls at two sides of the through hole 331, and the second dimension is the distance between two planes abutting against the hole walls at two ends of the through hole 331.

In the embodiments of the present disclosure, the dimension of the through hole 331 is designed reasonably, so as to avoid the situation that the dimension of the through hole 331 is too large which affects the structural strength of the first separator 300, or the dimension of the through hole 331 is too small which results in that the through hole cannot play a role of positioning the folding position during the folding process.

In some embodiments, referring to FIG. 12, the shape of the through hole 331 is a regular shape such as a rectangle, a circle, an ellipse, or a regular polygon. In addition to the regular shape, the through hole 331 may also have an irregular shape.

In some embodiments, referring to FIG. 10, the negative electrode plate 110 located outermost side of the composite cell group 30 is a single-sided electrode plate 113, and other negative electrode plates 110 are double-sided electrode plates 114. The negative electrode plate 110 disposed on the outermost side of the composite cell group 30 is designed to be a single-sided electrode plate 113, so that there is no need to provide an active material layer on the outermost side of the single-sided electrode plate 113, thereby reducing material input and cost.

Exemplarily, referring to FIG. 10, the single-sided electrode plate 113 includes a negative current collector 111 and a negative active layer 112. The negative active layer 112 is disposed on one side of the negative current collector 111 close to the second separator 120. The material of the negative current collector 111 may be copper, and the material of the negative active layer 112 may be graphite.

In some embodiments of the present disclosure, the negative electrode plate 110 disposed on the outermost side of the composite cell group 30 is designed to be the single-sided electrode plate 113, which reduces the use of negative active materials and reduces processing costs, and the outermost side of the single-sided electrode plate 113 does not need to be covered by the separator, thereby reducing the use of separator material and further reducing processing costs. Compared with related technologies, two layers of negative active layers 112 and two layers of separators are reduced, thereby reducing the thickness of the thermally composited laminated cell 50.

Exemplarily, referring to FIG. 10, the double-sided electrode plate 114 includes a negative current collector 111 and two negative active layers 112. Each of two side surfaces of the negative current collector 111 is provided with the negative active layer 112. The material of the negative current collector 111 may be copper, and the material of the negative active layer 112 may be graphite. The double-sided electrode plate 114 satisfies the electrical requirements of the thermally composited laminated cell 50.

In some embodiments, referring to FIG. 10, the negative electrode plate 110 includes the negative current collector 111 and the negative active layer 112. The thickness of the negative current collector 111 is D1, and 4 µm ≤ D1 ≤ 6 µm. The value of D1 can be 4.0 µm, 4.1 µm, 4.7 µm, 5.0 µm, 5.4 µm, 5.6 µm, 6.0 µm or other values which are not specifically listed herein. The thickness of the negative current collector 111 is reasonably designed to satisfy the electrical requirements of the negative electrode plate 110.

In some embodiments, referring to FIG. 10, the thickness of the negative active layer 112 is D2, and 50 µm≤D2≤200 µm. The value of D2 can be 50 µm, 65 µm, 72 µm, 89 µm, 95 µm, 108 µm, 117 µm, 122 µm, 136 µm, 144 µm, 159 µm, 162 µm, 175 µm, 187 µm, 198 µm, 200 µm or other values which are not specifically listed herein. The thickness of the negative active layer 112 is reasonably designed to satisfy the electrical requirements of the negative electrode plate 110.

In some embodiments, the positive electrode plate 130 includes a positive current collector and positive active layers, and each of two side surfaces of the positive current collector is provided with the positive active layer. Exemplarily, the material of the positive current collector may be aluminum foil, and the material of the positive active layer may be one or more of lithium cobalt oxide, lithium nickel oxide, lithium manganese oxide, lithium nickel cobalt manganese oxide, and lithium iron phosphate.

In some embodiments, referring to FIG. 2, FIG. 4 and FIG. 11, a negative electrode tab 140 is disposed on the negative electrode plate 140, a positive electrode tab 150 is disposed on the positive electrode plate 130, and each of the negative electrode tab 140 and the positive electrode tab 150 is at least partially extended outside of the second separator 120.

Exemplarily, in the first unit 100 or the second unit 200, the negative electrode plate 110 and the positive electrode plate 130 are rectangular, the negative electrode tab 140 is disposed on one side of the negative electrode plate 110, and the positive electrode tab 150 is disposed on one side of the positive electrode plate 130. Each of the negative electrode tab 140 and the positive electrode tab 150 is at least partially located outside the second separator 120.

In some embodiments, referring to FIG. 2, FIG. 4 and FIG. 11, in the first unit 100 or the second unit 200, along the thickness direction of the negative electrode plate 110, the projection of each of the negative electrode tabs 140 is overlapped with each other, and/or, the projection of each of the positive electrode tabs 150 is overlapped with each other. The negative electrodes tabs 140 are stacked along with the negative electrode plates 110, and the positive electrode tabs 150 are stacked along with the positive electrode plates 130. Along the thickness direction, adjacent negative electrode tabs 140 are spaced apart by the thickness of the second separator 120, and the projections of all negative electrode tabs 140 are at the same position. Adjacent positive electrode tabs 150 are spaced apart by the thickness of the second separator 120, and the projections of all positive electrode tabs 150 are at the same position. It is convenient to weld all the negative electrode tabs 140 as a whole, and weld all the positive electrode tabs 150 as a whole, and the negative electrode tabs 140 and the positive electrode tabs 150 occupy less space.

In some embodiments, referring to FIG. 2, FIG. 4 and FIG. 11, the projections of the negative electrode tab 140 and the positive electrode tab 150 on the plane where the second separator 120 is located are disposed side by side. The negative electrode tab 140 and the positive electrode tab 150 are on the same side of the second separator 120, and the projections of the negative electrode tab 140 and the positive electrode tab 150 on the plane where the second separator 120 is located are spaced apart, so as to prevent interference between the negative electrode tab 140 and the positive electrode tab 150, thereby ensuring electrical safety.

## Claims

1. A preparation method of a thermally composited laminated cell, **characterized by** comprising following operations:
preparing a plurality of first electrode plate groups (10) and a plurality of second electrode plate groups (20), wherein each of the first electrode plate groups (10) comprises a plurality of first units (100), each of the second electrode plate groups (20) comprises a plurality of second units (200), and a number of the first units (100) is same as a number of the second units (200);
wherein each of the first units (100) and each of the second units (200) comprise at least one negative electrode plate (110) and at least one positive electrode plate (130), along a thickness direction of the at least one negative electrode plate (110), each of the at least one negative electrode plate (110) and each of the at least one positive electrode plate (130) are disposed alternately, each of two outermost sides of each of the first units (100) is provided with one of the at least one negative electrode plate (110), and each of two outermost sides of each of the second units (200) is provided with one of the at least one positive electrode plate (130);
providing a first separator (300), and assembling the plurality of first electrode plate groups (10), the plurality of second electrode plate groups (20) and the first separator (300) to prepare a composite cell group (30); wherein the first separator (300) is folded to form a plurality of body portions (310) and a plurality of bending portions (320) disposed continuously and alternately, along a thickness direction of the first electrode plate groups (10), each of the first electrode plate groups (10) and each of the second electrode plate groups (20) are alternately disposed, one of the first electrode plate groups (10) and one of the second electrode plate groups (20) adjacent to each other are separated by one of the body portions (310), along a length direction of the body portions (310), the first units (100) of each of the first electrode plate groups (10) are spaced apart in sequence, the second units (200) of each of the second electrode plate groups (20) are spaced apart in sequence, and each of the first units (100) is disposed opposite to each of the second units (200); and
cutting the composite cell group (30) along a preset position (40) to prepare a plurality of thermally composited laminated cells (50), wherein the preset position (40) is a position between adjacent ones of the first units (100).

2. The preparation method of a thermally composited laminated cell according to claim 1, **characterized in that** each of the at least one negative electrode plate (110) and each of the at least one positive electrode plate (130) are separated by a second separator (120).

3. The preparation method of a thermally composited laminated cell according to claim 2, **characterized in that** any adjacent ones of second separators (120) in each of the first electrode plate groups (10) are connected to each other;
and/or, any adjacent ones of second separators (120) located in each of the second electrode plate groups (20) are connected to each other.

4. The preparation method of a thermally composited laminated cell according to claims 2 or 3, **characterized in that** along a length direction of the second separator (120), multiple negative electrode plates (110) located on a same side of the second separator (120) are spaced apart in sequence, multiple positive electrode plates (130) located on a same side of the second separator (120) are spaced apart in sequence, along a thickness direction of the second separator (120), a projection of each of the positive electrode plates (130) completely falls within a continuous planar area surrounded by an outer contour of each of the negative electrode plates (110).

5. The preparation method of a thermally composited laminated cell according to claim 2, **characterized in that** any adjacent ones of second separators (120) in each of the first electrode plate groups (10) are spaced apart;
and/or, any adjacent ones of second separators (120) in each of the second electrode plate groups (20) are spaced apart.

6. The preparation method of a thermally composited laminated cell according to claim 5, **characterized in that** along a thickness direction of the second separators (120), a projection of each of the at least one negative electrode plate (110) and a projection of each of the at least one positive electrode plate (130) on the second separators (120) fall within one of the second separators (120).

7. The preparation method of a thermally composited laminated cell according to claims 5 or 6, **characterized in that** a distance between any adjacent two of the second separators (120) in each of the first electrode plate groups (10) and/or in each of the second electrode plate groups (20) is the same.

8. The preparation method of a thermally composited laminated cell according to any one of claims 2 to 7, **characterized in that** along a thickness direction of the first units, each of the first units (100) is formed by stacking one of the at least one negative electrode plate (110), one of second separators (120) in each of the first units, one of the at least one positive electrode plate (130), another one of the second separators (120), and another one of the at least one negative electrode plate (110) in sequence;
and/or, each of the second units (200) is formed by stacking one of the at least one positive electrode plate (130), one of second separators (120) in each of the second units, one of the at least one negative electrode plate (110), another one of the second separators (120), and another one of the at least one positive electrode plate (130) in sequence.

9. The preparation method of a thermally composited laminated cell according to any one of claims 2 to 8, **characterized in that** each of the at least one negative electrode plate (110) and each of the at least one positive electrode plate (130) in each of the first units (100) are respectively connected to the second separator (120) in a thermally composited manner;
and/or, each of the at least one negative electrode plate (110) and each of the at least one positive electrode plate (130) in each of the second units (200) are respectively connected to the second separator (120) in a thermally composited manner.

10. The preparation method of a thermally composited laminated cell according to any one of claims 1 to 9, **characterized in that** a distance between adjacent ones of the first units (100) in the composite cell group (30) is d1, wherein 3 mm≤d1≤5 mm; and/or, a distance between adjacent ones of the second units (200) in the composite cell group (30) is d2, wherein 3 mm≤d2≤5 mm; and/or
wherein a distance d1 between adjacent ones of the first units (100) is same as a distance d2 between adjacent ones of the second units (200) in the composite cell group (30); and/or
wherein each of the bending portions (320) is provided with an incomplete-cutoff structure (330), and the first separator (300) is folded at the-incomplete-cut structure (330); and/or
wherein one of negative electrode plates (110) located at an outermost side of the composite cell group (30) is a single-sided electrode plate (113), and each of other ones of the negative electrode plates (110) is a double-sided electrode plate (114); and/or
wherein each of the at least one negative electrode plate (110) comprises a negative current collector (111) and at least one negative active layer (112), and a thickness of the negative current collector (111) is D1, 4 µm≤D1≤6 µm;
and/or, a thickness of each of the at least one negative active layer (112) is D2, 50 µm≤D2≤200 µm.

11. The preparation method of a thermally composited laminated cell according to any one of claims 2 to 9, **characterized in that** a negative electrode tab (140) is disposed on each of the at least one negative electrode plate (110), a positive electrode tab (150) is disposed on each of the at least one positive electrode plate (130), each of the negative electrode tab (140) and the positive electrode tab (150) at least partially extends outside the second separator (120); and/or, in the composite cell group (30), each of the negative electrode tab (140) and the positive electrode tab (150) at least partially extends outside the first separator (300).

12. The preparation method of a thermally composited laminated cell according to any one of claims 1 to 11, **characterized in that** the composite cell group (30) comprises M first electrode plate groups (10) and N second electrode plate groups (20), M and N are positive integers, and M-N=1.

13. A thermally composited laminated cell, **characterized in that** the thermally composited laminated cell (50) is any one of a plurality of thermally composited laminated cells (50) formed by cutting a composite cell group (30) along a preset position (40), wherein the composite cell group (30) comprises:
a plurality of first electrode plate groups (10), wherein each of the first electrode plate groups (10) comprises a plurality of first units (100) spaced apart in sequence;
a plurality of second electrode plate groups (20), wherein each of the second electrode plate groups (20) comprises a plurality of second units (200) spaced apart in sequence;
wherein each of the first units (100) and each of the second units (200) comprise at least one negative electrode plate (110) and at least one positive electrode plate (130), along a thickness direction of the at least one negative electrode plate (110), each of the at least one negative electrode plate (110) and each of the at least one positive electrode plate (130) are disposed alternately, each of two outermost sides of each of the first units (100) is provided with one of the at least one negative electrode plate (110), and each of two outermost sides of each of the second units (200) is provided with one of the at least one positive electrode plate (130);
a first separator (300) comprising a plurality of body portions (310) and a plurality of bending portions (320) disposed continuously and alternately, wherein along a thickness direction of the first electrode plate groups (10), each of the first electrode plate groups (10) and each of the second electrode plate groups (20) are alternately disposed, one of the first electrode plate groups (10) and one of the second electrode plate groups (20) adjacent to each other are separated by one of the body portions (310), and each of the first units (100) is disposed opposite to each of the second units (200); and
wherein the preset position (40) is a position between adjacent ones of the first units (100) along a length direction of the body portions (310).

14. The thermally composited laminated cell (50) according to claim 13, **characterized in that** each of the at least one negative electrode plate (110) and each of the at least one positive electrode plate (130) are separated by a second separator (120), and any adjacent ones of second separators (120) in each of the first electrode plate groups (10) and/or in each of the second electrode plate groups (20) are connected to each other; or
wherein each of the at least one negative electrode plate (110) and each of the at least one positive electrode plate (130) are separated by a second separator (120), and any adjacent ones of second separators (120) in each of the first electrode plate groups (10) and/or in each of the second electrode plate groups (20) are spaced apart.

15. The thermally composited laminated cell (50) according to any one of claims 13 to 14, **characterized in that**
along a thickness direction of the first units, each of the first units (100) comprises two negative electrode plates (110);
and/or, each of the second units (200) comprises two positive electrode plates (130).
